# EUROPEAN PATENT APPLICATION

(11) **EP 4 303 039 A1**
(43) Date of publication of application: **10.01.2024**
(21) Application number: 22871113.1
(22) Date of filing: 24.06.2022
(51) Int. Cl.: B60C 23/04, G06F 8/61, G06F 8/20

(54) **PROGRAMMING METHOD AND DEVICE BASED ON TIRE PRESSURE SENSING**

(30) Priority: 27.05.2022 CN 202210584019
(71) Applicant: Hamaton Automotive Technology Co., Ltd., Linping District Hangzhou, Zhejiang 311100 (CN)
(72) Inventor: ZHANG, Jianer, Hangzhou, Zhejiang 311199 (CN); DING, Haijun, Hangzhou, Zhejiang 311199 (CN); YU, Mingguang, Hangzhou, Zhejiang 311199 (CN)
(74) Representative: The IP Asset Partnership Limited
(86) International application number: PCT/CN2022/101129
(87) International publication number: WO 2023/226132

(57) **Abstract**

The present application provides a programming method and a programming device based on tire pressure sensing, which is related to the technical field of pressure sensing. The programming method includes: transmitting a region identification including at least one of a country, a region and a customer to an intelligent terminal through near-field communication for requesting the intelligent terminal to automatically match a database with the region identification and return a manufacturer code corresponding to a preset vehicle model identification from the database; receiving the manufacturer code sent by the intelligent terminal through near-field communication; and programming the tire pressure sensing device based on the manufacturer code. The programming method avoids an operator frequently manually switching countries, regions and customers on the intelligent terminal to match with the database, and also avoids a situation that the tire pressure sensing device cannot work normally due to error of manual switching.

## Description

### CROSS-REFERENCE TO RELATED APPLICATION

The present application claims priority to Chinese Application No. 202210584019.X, filed on May 27, 2022, entitled "Programming Method and Device Based on Tire Pressure Sensing", which is hereby incorporated by reference in its entirety.

### TECHNICAL FIELD

The present application relates to the field of pressure sensing technologies, in particular to a programming method and a programming device based on tire pressure sensing.

### BACKGROUND

Tire Pressure Monitoring System (TPMS) is an auxiliary safety system mounted on automobile tires for monitoring tire pressure in real time. By mounting a tire pressure sensing device having high-sensitivity and receiving and transmitting function on each wheel, tire pressure data and intra-tire temperature data are monitored in real time under a driving or static state, and are wirelessly transmitted to an external receiver. The external receiver is usually placed within a car to receive and display tire pressure and temperature data, and can alarm when the tire occurs leakage or low pressure so as to ensure driving safety.

Currently, tire pressure sensing devices being available on the market are mainly tire pressure sensing devices of which manufacturer codes are replaceable. Tire service providers or 4S stores only need to purchase one kind of tire pressure sensing devices, without requiring to separately purchase the tire pressure sensing devices for different vehicle models. It may greatly reduce management costs and inventory costs. When it requires to mount a tire pressure sensing device, the tire pressure sensing device is programmed by a special tool or related equipment into a manufacturer code corresponding to a model, and then is mounted to a corresponding tire so as to be used.

Such tire pressure sensing devices are usually sold all over the world. Vehicle models supported by each country and region are different. Even manufacturer codes used by the same vehicle model in different countries and regions may be different. If the special tool or related equipment is used to program such tire pressure sensing device, a country, a region or a customer should be selected correctly at first, so that it will switch to a database corresponding to the country, region or customer, so as to select a correct manufacturer code corresponding to the vehicle model in the database to program the tire pressure sensing device.

The following problems exist when using such special tool or related equipment to program the tire pressure sensing device.

The tire pressure sensing device and the special tool communicate through low frequency/radio frequency (LF/RF). In order to obtain information of a country, region or customer built-in the tire pressure sensing device, it requires to manually operate the special tool to send an LF command to the tire pressure sensing device first. After receiving the LF command, the tire pressure sensing device uploads the information of the country, region or customer to the special tool. However, since LF/RF transmission distance is long, the issued LF command may be received by a plurality of tire pressure sensing devices, and then the plurality of tire pressure sensing devices upload the information of the country, region or customer to the special tool. If the information of a plurality of countries, regions or customers is different, information interference will occur. Thus, the special tool cannot get the information uploaded by a current tire pressure sensing device to be programmed. Therefore, taking into consideration that it may occur information interference and it requires to manually operate the special tool to send LF command to the tire pressure sensing device, it is currently common means to make manually selection based on the country, region or customer printed on the housing of the tire pressure sensing device. If different tire pressure sensing devices are operated at the same time, it requires to manually switch different countries, regions or customers to match database, which may waste time and make operation to be complicated. If the tire pressure sensing device is directly programmed without correctly selecting a country, region or customer, it may not work, or a receiver within a car cannot analyze the tire pressure and tire temperature data transmitted by the tire pressure sensing device, thereby not displaying the tire pressure and tire temperature data, thus the user experience is very poor.

### SUMMARY

The present application provides a programming method and a programming device based on tire pressure sensing to solve the problem that different countries, regions or customers need to be manually switched to match with database when programming the tire pressure sensing device in related art, thus wasting time and complicating operation.

A programming method based on tire pressure sensing, applied to a tire pressure sensing device, is provided, which includes:
transmitting a region identification including at least one of a country, a region and a customer to an intelligent terminal through near-field communication for requesting the intelligent terminal to automatically match a database with the region identification and return a manufacturer code corresponding to a preset vehicle model identification from the database;
receiving the manufacturer code sent by the intelligent terminal through near-field communication; and
programming the tire pressure sensing device based on the manufacturer code.

The programming method based on tire pressure sensing according to the present application further includes: transmitting the preset vehicle model identification to the intelligent terminal through near-field communication for requesting the intelligent terminal to automatically match the preset vehicle model identification with the manufacturer code in the database and return the matched manufacturer code.

A programming method based on tire pressure sensing, applied to an intelligent terminal, is provided, which includes:
receiving region identification including at least one of a country, a region and a customer transmitted by tire pressure sensing device through near field communication;
matching a database with the region identification;
finding a manufacturer code corresponding to a preset vehicle model identification in the database; and
sending the manufacturer code to the tire pressure sensing device through near-field communication for requesting to program the tire pressure sensing device based on the manufacturer code.

According to the programming method based on tire pressure sensing provided by the present application, the finding a manufacturer code corresponding to a preset vehicle model identification in the database includes:
receiving a vehicle model selected by a user as the preset vehicle model identification, or receiving the preset vehicle model identification transmitted by the tire pressure sensing device through near-field communication mode; and
finding the manufacturer code corresponding to the preset vehicle model identification in the database based on the preset vehicle model identification.

According to a programming method based on tire pressure sensing provided by the present application, before the receiving region identification including at least one of a country, a region and a customer transmitted by tire pressure sensing device through near field communication, further includes: receiving a vehicle model selected by a user as a preset vehicle model identification.

A programming device based on tire pressure sensing is provided, which includes:
a region identification sending module, used to transmit a region identification including at least one of a country, a region and a customer to an intelligent terminal through near-field communication for requesting the intelligent terminal to automatically match a database with the region identification and return a manufacturer code corresponding to a preset vehicle model identification from the database;
a manufacturer code receiving module, used to receive the manufacturer code sent by the intelligent terminal through near-field communication; and
a programming module, used to program the tire pressure sensing device based on the manufacturer code.

The programming device based on tire pressure sensing provided by the present application further includes: vehicle model identification sending module, used to transmit the preset vehicle model identification to the intelligent terminal through near-field communication for requesting the intelligent terminal to automatically match the preset vehicle model identification with the manufacturer code in the database and return the matched manufacturer code.

A programming device based on tire pressure sensing is provided, which includes:
a region identification receiving module, used to receive region identification including at least one of a country, a region and a customer transmitted by tire pressure sensing device through near field communication;
a region identification matching module, used to match a database with the region identification;
a manufacturer code finding module, used to find a manufacturer code corresponding to a preset vehicle model identification in the database; and
a manufacturer code sending module, used to send the manufacturer code to the tire pressure sensing device through near-field communication for requesting to program the tire pressure sensing device based on the manufacturer code.

According to the programming device based on tire pressure sensing provided by the present application, the manufacturer code finding module includes:
a vehicle model identification receiving module, used to receive a vehicle model selected by a user as the preset vehicle model identification, or receive the preset vehicle model identification transmitted by the tire pressure sensing device through near-field communication mode; and
a finding module, used to find the manufacturer code corresponding to the preset vehicle model identification in the database based on the preset vehicle model identification.

An electronic device is provided, which includes a processor and a memory storing a computer program that is executable by the processor, where the computer program, when executed by the processor, causes the electronic device to perform the programming method based on tire pressure sensing and applied to a tire pressure sensing device, or perform the programming method based on tire pressure sensing and applied to an intelligent terminal.

A non-transient computer readable storage medium having computer program stored therein is provided, where the computer program, when executed by the processor, causes a processor to perform the programming method based on tire pressure sensing and applied to a tire pressure sensing device, or perform the programming method based on tire pressure sensing and applied to an intelligent terminal.

According to the programming method and the programming device based on tire pressure sensing provided by the present application, by automatically transmitting a region identification including at least one of a country, a region and a customer to an intelligent terminal through near-field communication, the intelligent terminal automatically matches a corresponding database with the region identification to find a manufacturer code corresponding to a preset vehicle model identification from the database, and transmit the manufacturer code to the tire pressure sensing device through near-field communication. Then the tire pressure sensing device is programmed based on the manufacturer code, so that in practical applications, it can avoid an operator frequently manually switching countries, regions and customers on the intelligent terminal to match with the database, and also avoid a situation that the tire pressure sensing device cannot work normally due to error of manual switching.

### BRIEF DESCRIPTION OF DRAWINGS

In order to more clearly illustrate the solutions according to the present application or the related art, the accompanying drawings used in the description of the embodiments of the present application or the related art will be briefly described below. It should be noted that the drawings in the following description are only part embodiments of the present application. For those of ordinary skill in the art, other drawings can be obtained according to these drawings without creative efforts.
FIG. 1 is a first flow diagram of a programming method based on tire pressure sensing provided by the present application.
FIG. 2 is a second flow diagram of a programming method based on tire pressure sensing provided by the present application.
FIG. 3 is a first structural schematic diagram of a programming device based on tire pressure sensing provided by the present application.
FIG. 4 is a second structural schematic diagram of a programming device based on tire pressure sensing provided by the present application.
FIG. 5 is a structural schematic diagram of an electronic device provided by the present application.

### DETAILED DESCRIPTION OF THE EMBODIMENTS

In order to make the objectives, solutions and advantages of the embodiments of the present application clearer, the solutions of the embodiments of the present application are clearly and completely described in combination with the accompanying drawings of the embodiments of the present application. The embodiments described are a part of the embodiments of the present application, rather than all the embodiments. Based on the embodiments of the present application, all other embodiments obtained by those of ordinary skill in the art without creative efforts fall within the scope of protection of the present application.

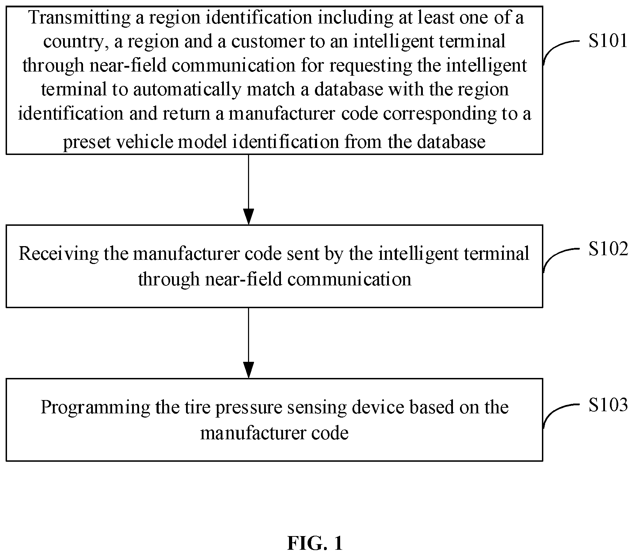

As shown in FIG. 1, an embodiment of the present application provides a programming method based on tire pressure sensing, applied to a tire pressure sensing device, which includes the following steps.

Step S101: a region identification including at least one of a country, a region and a customer is transmitted to an intelligent terminal through near-field communication for requesting the intelligent terminal to automatically match a database with the region identification and return a manufacturer code corresponding to a preset vehicle model identification from the database.

Before a tire pressure sensing device is manufactured, information of a country, region or customization customer is written into a built-in memory of the tire pressure sensing device, for example: an identification ID of the country or region, an identification ID of different customers, where if it is a customization customer, a country or region where the customization customer belongs can be known through an identification ID of the customization customer. In an embodiment, after establishing a communication connection between the tire pressure sensing device and the intelligent terminal, the tire pressure sensing device automatically sends its built-in above-mentioned region identification to the intelligent terminal.

Step S102: the manufacturer code sent by the intelligent terminal through near-field communication is received, where the manufacturer code is obtained from a database that matches with the country, region and customer.

Step S103: the tire pressure sensing device is programmed based on the manufacturer code, that is, the manufacturer code is written into a memory of the tire pressure sensing device, so that a processor of the tire pressure sensing device can execute the manufacturer code.

According to the programming method based on tire pressure sensing provided by the present application, by automatically transmitting a region identification including at least one of a country, a region and a customer to an intelligent terminal through near-field communication, the intelligent terminal automatically matches a corresponding database with the region identification to find a manufacturer code corresponding to a preset vehicle model identification from the database, and transmit the manufacturer code to the tire pressure sensing device through near-field communication. The tire pressure sensing device is programmed based on the manufacturer code, so that in practical applications, it can avoid an operator frequently manually switching countries, regions and customers on the intelligent terminal to match with the database, and further avoid a situation that the tire pressure sensing device cannot work normally due to error of manual switching. The region identification is transmitted to the intelligent terminal by near field communication (NFC), and the manufacturer code sent by the intelligent terminal is received by near field communication. That is, a communication connection between the intelligent terminal and the tire pressure sensing device is established through a NFC communication module. Compared with existing low frequency/radio frequency (LF/RF) communication, it may not only make the tire pressure sensing device automatically send the region identification including at least one of a country, a region and a customer when the tire pressure sensing device senses that the intelligent terminal is close, but also make the intelligent terminal only communicate with a close tire pressure sensing device due to a short transmission distance when the communication is performed, thus avoiding information interference.

In practical applications, some customization customers want to customize a batch of tire pressure sensing devices for a certain vehicle model, or customize tire pressure sensing devices for a certain brand of vehicle. Due to intelligence of a vehicle machine system, different vehicle models of the same brand often use the same manufacturer code, so that a receiver used to display tire pressure and tire temperature in a vehicle can be used on different vehicle models. Therefore, this kind of customized tire pressure sensing devices in a factory is usually also built-in preset vehicle logo, preset vehicle logo can be the vehicle model itself. For example, only a tire pressure sensing device for a certain vehicle model is customized, and information of the vehicle model is built in the tire pressure sensing device. The preset vehicle model identification can also be a code value corresponding to the vehicle model, and a plurality of vehicle models can correspond to a code value, and a code value corresponds to a manufacturer code. For example, all vehicle models of a brand correspond to a code value, and then the code value can be preset to the tire pressure sensing device.

Further, the method based on tire pressure sensing of the present application further includes: transmitting the preset vehicle model identification to the intelligent terminal through near-field communication for requesting the intelligent terminal to automatically match the preset vehicle model identification with the manufacturer code in the database and return the matched manufacturer code, thus, avoiding the steps of manual selection of vehicle models, further improving intelligence of tire pressure sensing device programming, and avoiding the problem of manual selection errors. In an embodiment, the preset vehicle model identification can be transmitted to the intelligent terminal together with the region identification, or can be transmitted to the intelligent terminal before or after the region identification.

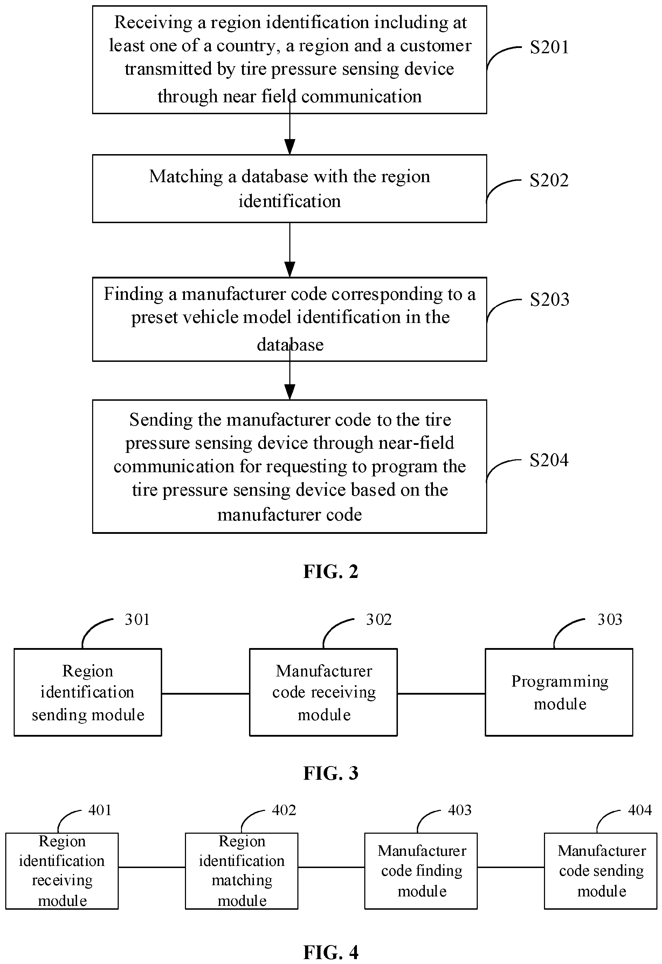

As shown in FIG. 2, an embodiment of the present application provides a programming method based on tire pressure sensing, applied to an intelligent terminal, which includes the following steps.

Step S201: region identification including at least one of a country, a region and a customer transmitted by tire pressure sensing device through near field communication is received. Before a tire pressure sensing device is manufactured, information of a country, region or customer is written into a built-in memory of the tire pressure sensing device, for example, an identification ID of the country or region, an identification ID of different customers, where if it is a customization customer, a country or region where the customization customer belongs can be known through an identification ID of the customization customer. In an embodiment, when the intelligent terminal is close to the tire pressure sensing device, a communication near-field connection is established, and the intelligent terminal receives the region identification automatically uploaded by the tire pressure sensing device.

Step S202: a database is matched with the region identification. In an embodiment, an intelligent terminal can obtain databases corresponding to different countries or regions. For customization customers, a manufacturer code database corresponding to a customer alone can be used, or a manufacturer code database of customer's country or region can be also used. Each database stores different vehicle models and their corresponding manufacturer codes, and the intelligent terminal can also obtain a mapping table of different region identification and corresponding database names. After receiving the region identification, the mapping table is used to determine whether a current database is a database that matches with the received region identification. If so, step S203 is performed directly; otherwise, a switch operation is performed, and then step S203 is performed. The database and mapping table mentioned above can be stored inside the intelligent terminal, or can be obtained by the intelligent terminal from outside, such as cloud. The intelligent terminal can be a mobile phone, tablet computer or specific device.

Step S203: a manufacturer code corresponding to a preset vehicle model identification is found in the database. In an embodiment, the manufacturer code corresponding to the preset vehicle model identification is found in a corresponding relationship table between the vehicle model and the manufacturer code in the database, where the relationship table may include corresponding relationship between the vehicle model and the manufacturer code, or corresponding relationship between the code value, which can represent the vehicle model, and the manufacturer code, or corresponding relationship between the vehicle model, the code value and the manufacturer code, which is not limited in the present embodiment.

Step S204: the manufacturer code is sent to the tire pressure sensing device through near-field communication for requesting to program the tire pressure sensing device based on the manufacturer code.

According to the programming method based on tire pressure sensing provided by the present application, by receiving a region identification including at least one of a country, a region and a customer automatically uploaded by a programming device based on tire pressure sensing through near-field communication, the intelligent terminal automatically matches a corresponding database with the region identification to find a manufacturer code corresponding to a preset vehicle model identification from the database, and transmit the manufacturer code to the tire pressure sensing device through near-field communication. Then the tire pressure sensing device is programmed based on the manufacturer code, so that in practical applications, it can avoid an operator frequently manually switching countries, regions or customers on the intelligent terminal to match with the database, and also avoid a situation that the tire pressure sensing device cannot work normally due to error of manual switching. A communication connection between the intelligent terminal and the tire pressure sensing device is established through a NFC communication module. Compared with the existing LF/RF (low frequency/radio frequency) communication, as along as the intelligent terminal is close to a programmed tire pressure sensing device, it can automatically obtain the region identification including at least one of a country, a region and a customer transmitted by the tire pressure sensing device. When the communication is performed, the intelligent terminal only communicates with a close tire pressure sensing device due to a short transmission distance, thus avoiding information interference.

In this embodiment, the step S203 includes: receiving a vehicle model selected by a user as the preset vehicle model identification, and the user selects a vehicle model through an intelligent terminal man-machine interface, for example, select the vehicle model from a drop-down list.

According a preset vehicle model identification, the manufacturer code corresponding to the preset vehicle model identification is found in the database. Since the database already corresponds to the region identification including at least one of a country, a region and a customer, the found manufacturer code is suitable for the vehicle model sold to the country, region or customer.

In order to adapt to operation habits of different users, it can also receive the vehicle model selected by the user as the preset vehicle model identification before receiving the region identification including at least one of a country, a region and a customer transmitted by the tire pressure sensing device. In an embodiment, the user first selects the vehicle model before approaching the intelligent terminal to the tire pressure sensing device. After receiving the region identification including at least one of a country, a region and a customer transmitted by the tire pressure sensing device through near-field communication, the subsequent steps S202 to S204 are automatically performed.

In this embodiment, for the tire pressure sensing devices that are built in a preset vehicle model identification when leaving the factory, step S203 includes: receiving the preset vehicle model identification transmitted by the tire pressure sensing device through near-field communication mode; and finding the manufacturer code corresponding to the preset vehicle model identification in the database based on the preset vehicle model identification. The manufacturer code corresponding to the preset vehicle model identification can be automatically matched, thereby eliminating the step of manually selecting the vehicle model. In practical application, it only requires the intelligent terminal close to the tire pressure sensing device, and the above steps S201 to S204 are automatically performed without manual intervention, which further improves the intelligence of the tire pressure sensing device programming, and also avoids the problem of manual selection error.

The programming device based on tire pressure sensing provided by the present application is described below. The programming device based on tire pressure sensing described below and the programming method based on tire pressure sensing described above can be referred to each other.

As shown in FIG. 3, an embodiment of the present application provides a programming device based on tire pressure sensing, which includes:
a region identification sending module 301, used to transmit a region identification including at least one of a country, a region and a customer to an intelligent terminal through near-field communication for requesting the intelligent terminal to automatically match a database with the region identification, and return a manufacturer code corresponding to a preset vehicle model identification from the database;
a manufacturer code receiving module 302, used to receive the manufacturer code sent by the intelligent terminal through near-field communication; and
a programming module 303, used to program the tire pressure sensing device based on the manufacturer code.

According to the programming device based on tire pressure sensing provided by the present embodiment, by automatically transmitting a region identification including at least one of a country, a region and a customer to an intelligent terminal through near-field communication, the intelligent terminal automatically matches a corresponding database with the region identification to find a manufacturer code corresponding to a preset vehicle model identification from the database, and transmit the manufacturer code to the tire pressure sensing device through near-field communication. The tire pressure sensing device is programmed based on the manufacturer code, so that in practical applications, it can avoid an operator frequently manually switching countries, regions or customers on the intelligent terminal to match with the database, and further avoid a situation that the tire pressure sensing device cannot work normally due to error of manual switching. The region identification is transmitted to the intelligent terminal by near field communication (NFC), and the manufacturer code sent by the intelligent terminal is received by near field communication. That is, a communication connection between the intelligent terminal and the tire pressure sensing device is established through a NFC communication module. Compared with existing low frequency/radio frequency (LF/RF) communication, it may not only make the tire pressure sensing device automatically send the region identification including at least one of a country, a region and a customer when the tire pressure sensing device senses that the intelligent terminal is close, but also make the intelligent terminal only communicates with a close tire pressure sensing device due to a short transmission distance when the communication is performed, thus avoiding information interference.

In an embodiment, the programming device based on tire pressure sensing provided by the present embodiment further includes: vehicle model identification sending module, used to transmit the preset vehicle model identification to the intelligent terminal through near-field communication for requesting the intelligent terminal to automatically match the preset vehicle model identification with the manufacturer code in the database and return the matched manufacturer code.

As shown in FIG. 4, an embodiment of the present application provides a programming device based on tire pressure sensing, which includes:
a region identification receiving module 401, used to receive region identification including at least one of a country, a region and a customer transmitted by tire pressure sensing device through near field communication;
a region identification matching module 402, used to match a database with the region identification;
a manufacturer code finding module 403, used to find a manufacturer code corresponding to a preset vehicle model identification in the database; and
a manufacturer code sending module 404, used to send the manufacturer code to the tire pressure sensing device through near-field communication for requesting to program the tire pressure sensing device based on the manufacturer code.

According to the programming device based on tire pressure sensing provided by the present embodiment, by receiving a region identification including at least one of a country, a region and a customer automatically uploaded by a programming device based on tire pressure sensing through near-field communication, the intelligent terminal automatically matches a corresponding database with the region identification to find a manufacturer code corresponding to a preset vehicle model identification from the database, and transmit the manufacturer code to the tire pressure sensing device through near-field communication. The tire pressure sensing device is programmed based on the manufacturer code, so that in practical applications, it can avoid an operator frequently manually switching countries, regions and customers on the intelligent terminal to match with the database, and further avoid a situation that the tire pressure sensing device cannot work normally due to error of manual switching. A communication connection between the intelligent terminal and the tire pressure sensing device is established through a NFC communication module. Compared with the existing LF/RF (low frequency/radio frequency) communication, as long as the intelligent terminal is close to a programmed tire pressure sensing device, it can automatically obtain the region identification including at least one of a country, a region and a customer transmitted by the tire pressure sensing device. When the communication is performed, the intelligent terminal only communicates with a close tire pressure sensing device due to a short transmission distance, thus avoiding information interference.

In an embodiment, the manufacturer code finding module 403 includes:
a vehicle model identification receiving module, used to receive a vehicle model selected by a user as the preset vehicle model identification, or receive the preset vehicle model identification transmitted by the tire pressure sensing device through near-field communication mode; and
a finding module, used to find the manufacturer code corresponding to the preset vehicle model identification in the database based on the preset vehicle model identification.

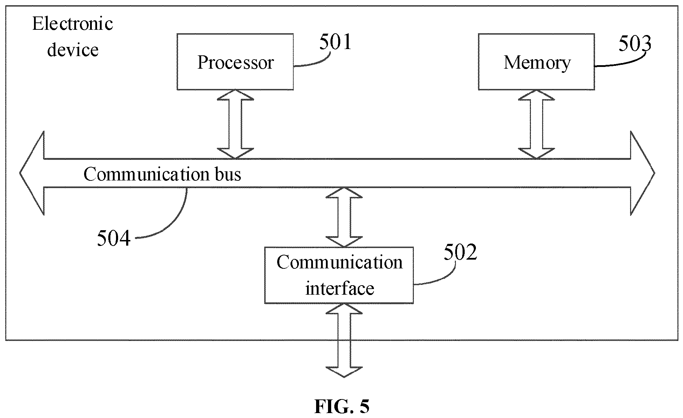

FIG. 5 illustrates a structural diagram of an electronic device provided by the present application. The electronic device can include: a processor 501, a communication interface 502, a memory 503 and a communication bus 504. The processor 501, the communication interface 502 and the memory 503 communicate with each other through the communication bus 504.

In an electronic device, such as a tire pressure sensing, the processor 501 may invoke the logic instruction which is stored in the memory 503 to perform the programming method based on tire pressure sensing and applied to the programming device based on tire pressure sensing. The programming method includes:
transmitting a region identification including at least one of a country, a region and a customer to an intelligent terminal through near-field communication for requesting the intelligent terminal to automatically match a database with the region identification and return a manufacturer code corresponding to a preset vehicle model identification from the database;
receiving the manufacturer code sent by the intelligent terminal through near-field communication; and
programming the tire pressure sensing device based on the manufacturer code.

In another electronic device, such an intelligent terminal, the processor 501 may invoke the logic instruction which is stored in the memory 503 to perform the programming method based on tire pressure sensing and applied to the intelligent terminal. The programming method includes:
receiving region identification including at least one of a country, a region and a customer transmitted by tire pressure sensing device through near field communication;
matching a database with the region identification;
finding a manufacturer code corresponding to a preset vehicle model identification in the database; and
sending the manufacturer code to the tire pressure sensing device through near-field communication for requesting to program the tire pressure sensing device based on the manufacturer code.

In addition, the logic instructions in the memory 503 may be implemented in the form of software functional units and may be stored in a computer readable storage medium when being sold or used as independent product. Based on such understandings, the technical solutions of the present application or the part that contributes to the prior art or the part of the technical solutions can be embodied in the form of a software product in essence. The computer software product is stored in a storage medium, including a number of instructions to enable a computer device (such as personal computer, server, or network device, etc.) to perform all or a part of the steps of the methods described in each embodiment of the application. The aforementioned storage media includes: USB flash disk, mobile hard disk, Read-Only Memory (ROM), Random Access Memory (RAM), magnetic disk, compact disk and other media that can store program codes.

On the other hand, the embodiments of the present application also provide a computer program product. The computer program product includes a computer program that is stored in a non-transient computer readable storage medium. When the computer program is executed by the processor, the computer can perform the programming method based on tire pressure sensing and applied to the tire pressure sensing device. The programming method includes:
transmitting a region identification including at least one of a country, a region and a customer to an intelligent terminal through near-field communication for requesting the intelligent terminal to automatically match a database with the region identification and return a manufacturer code corresponding to a preset vehicle model identification from the database;
receiving the manufacturer code sent by the intelligent terminal through near-field communication; and
programming the tire pressure sensing device based on the manufacturer code.

Alternatively, the computer may perform the programming method based on tire pressure sensing and applied to the intelligent terminal. The programming method includes:
receiving region identification including at least one of a country, a region and a customer transmitted by tire pressure sensing device through near field communication;
matching a database with the region identification;
finding a manufacturer code corresponding to a preset vehicle model identification in the database; and
sending the manufacturer code to the tire pressure sensing device through near-field communication for requesting to program the tire pressure sensing device based on the manufacturer code.

On the other hand, the embodiments of the present application also provide a non-transient computer readable storage medium storing a computer program, the computer program is executed by a processor to implement steps of the programming method based on tire pressure sensing and applied to the tire pressure sensing device. The programming method includes:
transmitting a region identification including at least one of a country, a region and a customer to an intelligent terminal through near-field communication for requesting the intelligent terminal to automatically match a database with the region identification and return a manufacturer code corresponding to a preset vehicle model identification from the database;
receiving the manufacturer code sent by the intelligent terminal through near-field communication; and
programming the tire pressure sensing device based on the manufacturer code.

Alternatively, the computer can perform the programming method based on tire pressure sensing and applied to the intelligent terminal. The programming method includes:
receiving region identification including at least one of a country, a region and a customer transmitted by tire pressure sensing device through near field communication;
matching a database with the region identification;
finding a manufacturer code corresponding to a preset vehicle model identification in the database; and
sending the manufacturer code to the tire pressure sensing device through near-field communication for requesting to program the tire pressure sensing device based on the manufacturer code.

The device embodiments described above are only illustrative, in which the unit described as a separation component may be or may not be physically separated, and the component displayed as a unit may be or may not be a physical unit. That is, it may be located in a network unit or may be distributed to multiple network units. Some or all of the modules may be selected according to the actual requirements to achieve the purpose of the scheme of the embodiments. Those of ordinary skill in the art may understand and implement the embodiments without creative efforts.

Through the description of the above embodiment methods, those of ordinary skill in the art may clearly understand that each embodiment may be realized by software and the necessary general hardware platform, and of course, it can also be realized by hardware. Based on such understandings, the above-mentioned solution can be embodied in the form of a software product in essence or the part that makes contribution to the prior art. The computer software product can be stored in a computer readable storage medium, such as a ROM/RAM, a disk, an optical disk, and the like, including a number of instructions to enable a computer device (which can be a personal computer, a server, or network equipment) to perform the methods described in each embodiment or some parts of the embodiments.

Finally, it should be noted that the above embodiments are only used to illustrate the solutions of the present application, rather than limiting the solutions. Although the present application is described in detail with reference to the above embodiments, those of ordinary skill in the art should understand that they can still modify the solutions recorded in the above embodiments, or make equivalent replacements to some of the features; these modifications or replacements do not make the essence of the corresponding solutions depart from the scope of the solutions of various embodiments of the present application.

## Claims

1. A programming method based on tire pressure sensing, applied to a tire pressure sensing device, comprising:
transmitting a region identification to an intelligent terminal through near-field communication for requesting the intelligent terminal to automatically match a database with the region identification and return a manufacturer code corresponding to a preset vehicle model identification from the database, wherein the region identification comprises at least one of a country, a region or a customer;
receiving the manufacturer code sent by the intelligent terminal through near-field communication; and
programming the tire pressure sensing device based on the manufacturer code.

2. The programming method based on tire pressure sensing according to claim 1, further comprising:
transmitting the preset vehicle model identification to the intelligent terminal through near-field communication for requesting the intelligent terminal to automatically match the preset vehicle model identification with the manufacturer code in the database and return the matched manufacturer code.

3. A programming method based on tire pressure sensing, applied to an intelligent terminal, comprising:
receiving a region identification transmitted by tire pressure sensing device through near field communication, wherein the region identification comprises at least one of a country, a region or a customer;
matching a database with the region identification;
finding a manufacturer code corresponding to a preset vehicle model identification in the database; and
sending the manufacturer code to the tire pressure sensing device through near-field communication for requesting to program the tire pressure sensing device based on the manufacturer code.

4. The programming method based on tire pressure sensing according to claim 3, wherein the finding the manufacturer code corresponding to the preset vehicle model identification in the database comprises:
receiving a vehicle model selected by a user as the preset vehicle model identification, or receiving the preset vehicle model identification transmitted by the tire pressure sensing device through near-field communication mode; and
finding the manufacturer code corresponding to the preset vehicle model identification in the database based on the preset vehicle model identification.

5. The programming method based on tire pressure sensing according to claim 3, before the receiving region identification transmitted by tire pressure sensing device through near field communication, further comprising: receiving a vehicle model selected by a user as a preset vehicle model identification.

6. A programming device based on tire pressure sensing, comprising:
a region identification sending module, configured to transmit a region identification to an intelligent terminal through near-field communication for requesting the intelligent terminal to automatically match a database with the region identification and return a manufacturer code corresponding to a preset vehicle model identification from the database, wherein the region identification comprises at least one of a country, a region or a customer;
a manufacturer code receiving module, configured to receive the manufacturer code sent by the intelligent terminal through near-field communication; and
a programming module, configured to program the tire pressure sensing device based on the manufacturer code.

7. The programming device based on tire pressure sensing according to claim 6, further comprising:
a vehicle model identification sending module, configured to transmit the preset vehicle model identification to the intelligent terminal through near-field communication for requesting the intelligent terminal to automatically match the preset vehicle model identification with the manufacturer code in the database and return the matched manufacturer code.

8. A programming device based on tire pressure sensing, comprising:
a region identification receiving module, configured to receive a region identification transmitted by tire pressure sensing device through near field communication, wherein the region identification comprises at least one of a country, a region or a customer;
a region identification matching module, configured to match a database with the region identification;
a manufacturer code finding module, configured to find a manufacturer code corresponding to a preset vehicle model identification in the database; and
a manufacturer code sending module, configured to send the manufacturer code to the tire pressure sensing device through near-field communication for requesting to program the tire pressure sensing device based on the manufacturer code.

9. The programming device based on tire pressure sensing according to claim 8, wherein the manufacturer code finding module comprises:
a vehicle model identification receiving module, configured to receive a vehicle model selected by a user as the preset vehicle model identification, or receive the preset vehicle model identification transmitted by the tire pressure sensing device through near-field communication mode; and
a finding module, configured to find the manufacturer code corresponding to the preset vehicle model identification in the database based on the preset vehicle model identification.

10. An electronic device, comprising:
a processor; and
a memory storing a computer program that is executable by the processor, wherein the computer program, when executed by the processor, causes the electronic device to perform the programming method based on tire pressure sensing and applied to a tire pressure sensing device according to any one of claims 1 to 2, or perform the programming method based on tire pressure sensing and applied to an intelligent terminal according to any one of claims 3 to 5.

11. A non-transient computer readable storage medium having computer program stored therein, wherein the computer program, when executed by the processor, causes a processor to perform the programming method based on tire pressure sensing and applied to a tire pressure sensing device according to any one of claims 1 to 2, or perform the programming method based on tire pressure sensing and applied to an intelligent terminal according to any one of claims 3 to 5.
